# EUROPEAN PATENT APPLICATION

(11) **EP 2 779 374 A1**
(43) Date of publication of application: **17.09.2014**
(21) Application number: 14159216.2
(22) Date of filing: 12.03.2014
(51) Int. Cl.: H02K 9/14

(54) **Fan shroud and motor assembly comprised thereof**

(30) Priority: 15.03.2013 US 201313832942
(71) Applicant: General Electric Company, Schenectady, New York 12345 (US)
(72) Inventor: Stehulak, Gregory Michael, Fort Wayne, IN Indiana 46802-4332 (US)
(74) Representative: Serjeants LLP

(57) **Abstract**

This disclosure proposes designs for a fan shroud (200) that dissipates thermal energy from a motor using a single, externally-powered fan design. Examples of the proposed fan shroud (200) allow the cooling fluid to achieve maximum velocity at a position at which the fan shroud (200) exposes the flow to cooler ambient air that surrounds the fan shroud/motor assembly. In this configuration, the high-velocity cooling fluid draws the cooler ambient air towards the surface of the motor, which, in turn, increases the thermal capacity of the moving cooling fluid to dissipate more thermal energy from the motor. The fan shroud (200) can include a top element (214), a first side element (216), and a front element (220). The first side element (216) and the front element (220) couple with the top element (214) at a first end. The first side element (216) terminates at a second end that is spaced apart from the motor a first side distance to form a first side gap. The front element (220) has a front contoured edge (226) proximate to and spaced apart from the motor a first front distance to form a front gap and the first side distance is substantially the same as the first front distance.

## Description

### BACKGROUND OF THE INVENTION

The subject matter disclosed herein relates to structures that dissipate thermal energy and, in particular, to embodiments of a fan shroud that disperse cooling fluid about a motor, e.g., for use to actuate the pitch of a turbine wind blade.

Motors that operate under prolonged conditions can generate excessive heat. The high temperatures that result from these conditions can reduce performance and shorten the overall lifespan of the motor. To avoid these problems, many motors incorporate one or more fans that move a cooling fluid (e.g., air) over the outer surface of the motor to draw off and disperse thermal energy. These fans may couple with a shroud, which helps direct a majority of the moving fluid towards the outer surface of the motor.

Designs that improve cooling efficiency and/or cooling rates often increase the amount of cooling fluid that comes in proximity to the outer surface of the motor. For example, some designs utilize additional fans to disperse more fluid into the shroud. Other designs may increase the size (e.g., flow rate) of the fan to meet cooling requirements and demands. When changes to the fan are not practical, however, new designs may introduce changes in the shroud to provide geometry that harnesses the cooling fluid in a manner that facilitates thermal dissipation. Unfortunately, although each of these design choices afford better thermal energy control, the improvements to enhance performance may add costs and complexity to the design that run contrary to product commercialization and budgetary constraints.

The discussion above is merely provided for general background information and is not intended to be used as an aid in determining the scope of the claimed subject matter.

### BRIEF DESCRIPTION OF THE INVENTION

This disclosure proposes designs for a fan shroud that dissipates thermal energy from a motor using a single fan design. Examples of the proposed fan shroud allow the cooling fluid to achieve maximum velocity at a position at which the fan shroud exposes the flow to cooler ambient air that surrounds the fan shroud/motor assembly. In this configuration, the high-velocity cooling fluid draws the cooler ambient air towards the surface of the motor, which, in turn, increases the thermal capacity of the moving cooling fluid to dissipate more thermal energy from the motor.

This disclosure describes, in one embodiment, a fan shroud for a motor. The fan shroud has a top element, a first side element, and a front element. The first side element and the front element couple with the top element at a first end. The first side element terminates at a second end that is spaced apart from the motor a first side distance to form a first side gap. The front element has a front contoured edge proximate to and spaced apart from the motor a first front distance to form a front gap. The first side distance is substantially the same as the first front distance.

This disclosure also describes, in one embodiment, a fan shroud for a motor. The fan shroud has a top element and a pair of side elements that couple with the top element at a first end and terminate at a second end that is spaced apart from the motor a first side distance and a second side distance to form, respectively, a first side gap and a second side gap. The fan shroud also has a front element that couples with the top element and has a front contoured edge proximate to and spaced apart from the motor a first front distance to form a front gap. The fan shroud further has a back element that couples with the top element and has a back contoured end proximate to and spaced apart from the motor a first back distance to form a back gap. In one example, the first side distance is substantially the same as at least one of the first front distance and the first back distance.

This disclosure further describes, in one embodiment, a motor assembly with a motor with a central motor axis. The motor assembly includes a motor with a central motor axis. The motor also includes a fan shroud coupled to the motor. The fan shroud comprises a first side element and a front element. The first side element terminates at a second end that is spaced apart from the motor a first side distance to form a first side gap. The front element has a front contoured edge proximate to and spaced apart from the motor a first front distance to form a front gap. The first side distance is substantially the same as the first front distance.

This brief description of the invention is intended only to provide a brief overview of the subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:
FIG. 1 depicts a perspective view of an exemplary embodiment of a fan shroud as part of a motor assembly;
FIG. 2 depicts a perspective view of an exemplary embodiment of a fan shroud;
FIG. 3 depicts a front view of the fan shroud of FIG. 2;
FIG. 4 depicts a perspective view of the fan shroud of FIG. 2 as part of a motor assembly;
FIG. 5 depicts a front view of the motor assembly of FIG. 4;
FIG. 6 depicts a flow pattern of cooling fluid that can occur on the motor assembly of FIG. 5;
FIG. 7 depicts a side view of the motor assembly of FIG. 4 to illustrate the flow pattern of cooling fluid of FIG. 6; and
FIG. 8 depicts an example of a material blank that can be used to form an exemplary embodiment of a fan shroud.

### DETAILED DESCRIPTION OF THE INVENTION

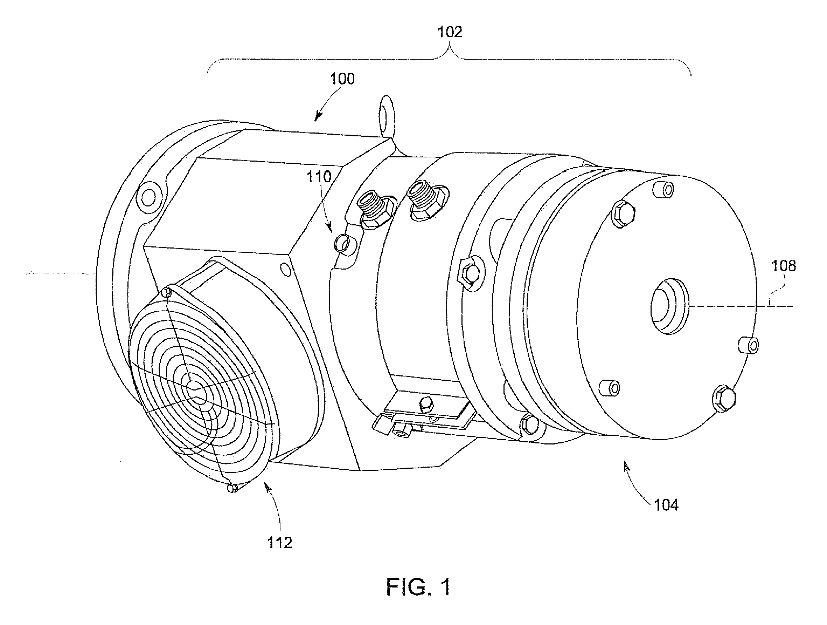

FIG. 1 illustrates an exemplary embodiment of a fan shroud 100 that can improve cooling efficiency to maintain the temperature of a motor. The fan shroud 100 is part of a motor assembly 102. Examples of the motor assembly 102 find use in a variety of applications, namely, to adjust the position of rotor blades found in wind turbine systems. In the example of FIG. 1, the motor assembly 102 has a motor 104 with a central motor axis 108. One or more fasteners 110 couple the fan shroud 100 to the motor 104. This configuration mounts a fan 112, which can secure to the fan shroud 100, in position on the motor 104.

Implementation of the motor assembly 102 as part of a wind turbine system often requires the motor 104 to hold the rotor blades in one or more desired positions. To fulfill this requirement, the wind turbine system often maintains power on the motor 104 for extended periods of time. Energizing the motor 104 in this manner generates heat. Operation of the fan 112 dissipates the heat from the motor assembly 102 by flowing cooling fluid (e.g., air) into the fan shroud 100 and proximate the motor 104.

As set forth more below, construction of the fan shroud 100 facilitates cooling by improving flow characteristics of the cooling fluid. Embodiments of the fan shroud 100 form gaps with the motor 104 that allow cooling fluid to exit the shroud 100. In one embodiment, the gaps are sized and configured to prevent formation of vortexes as the cooling fluid disperses from the fan shroud 100. This feature allows the cooling fluid to flow closely to the motor 104, thus increasing dissipation of thermal energy from the motor 104 during operation. In other embodiments, the fan shroud 100 has features that allow the cooling fluid to achieve maximum velocity at locations along the motor 104. These embodiments take advantage of the high velocity of the moving cooling fluid to draw additional, cooler fluid from the environment outside of the fan shroud 100 into the flowstreams that form about the motor 104. The addition of this cooler fluid expands the thermal capacity of the cooling fluid to increase the amount of heat that can dissipate from the motor 104, e.g., during extended operation of the motor assembly 102.

The fan shroud 100 can embody a unitary or monolithic structure, e.g., that is formed from sheet metal (e.g., steel, stainless steel, aluminum, etc.). The materials of construction may comprise thermally conductive materials that can further enhance thermal dissipation. In other examples, construction of the fan shroud 100 can incorporate a number of individual pieces that secure together using known fasteners (e.g., screws and bolts) and techniques (e.g., welds).

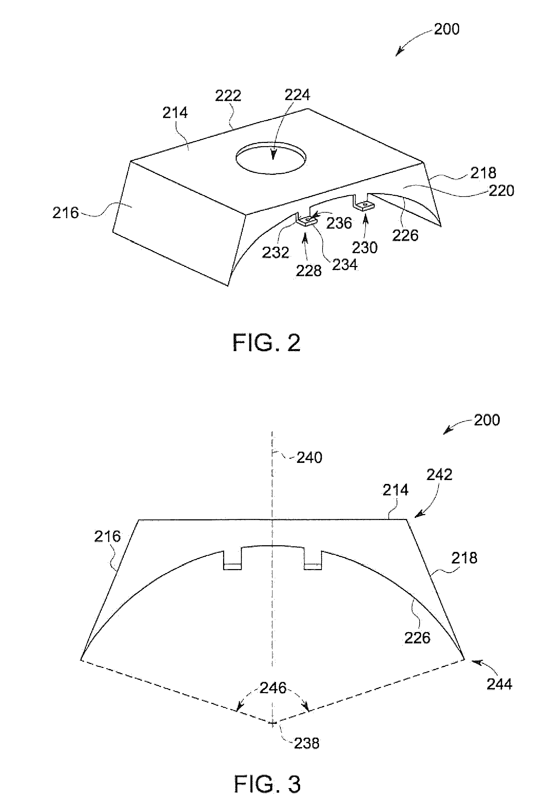

FIG. 2 illustrates another exemplary embodiment of a fan shroud 200 for use in a motor assembly 202. The fan shroud 200 has a top element 214 and a plurality of side elements (e.g., a first side element 216 and a second side element 218). The fan shroud 200 also has a front element 220 and a back element 222. As also shown in FIG. 2, the top element 214 has an aperture 224. The front element 220 and the back element 222 have an edge 226 that, in one configuration, has a contour that matches the contour and/or shape of the outer profile of the motor 204. Examples of outer profile can form a circular shape, e.g., wherein the motor 204 has a generally round and/or cylindrical configuration.

The fan shroud 200 also comprises one or more mounting features (e.g., a first mounting feature 228 and a second mounting feature 230) that secure to one or more of the front element 220 and the back element 222. In one embodiment, the mounting features 228, 230 are found on both the front element 220 and the back element 222. The mounting features 228, 230 can form an L-bracket with a first portion 232 that extends radially and a second portion 234 that extends axially, e.g., relative to the axis of the motor (e.g., central motor axis 108 of FIG. 1). The first portion 232 can secure with the fan shroud 200, e.g., to one of the front element 220 and the back element 222. The second portion 234 can have an opening 236 that can receive a fastener (e.g., fasteners 110 of FIG. 1) to secure the fan shroud 200 in position on the motor (e.g., motor 104 of FIG. 1), as shown in the example of FIG. 1 above.

FIG. 3 illustrates a front view of the fan shroud 200 of FIG. 2. The fan shroud 200 has a shroud axis 238 and a centerline 240 that extends through the shroud axis 238. In one example, the shroud axis 238 forms a center point for the shape that defines the contour of the edge 226. The side elements 216, 218 secure to the top element 214 at a first end 242 and terminate at a second end 244. As shown in FIG. 3, the ends 244 of the first side element 216 and the second side element 218 subtend an angle 246 about the shroud axis 238.

In one embodiment, the fan shroud 200 is symmetric about the centerline 240, e.g., where the first side element 216 and the second side element 218 are positioned an equal distance with respect to the centerline 240. This configuration locates the second end 244 of the first side element 216 diametrically opposite of the second end 244 of the second side element 218. However, in other configurations, the fan shroud 200 can forgo such symmetry and still promote optimal flow dynamics of the cooling fluid to improve cooling efficiency, as discussed above. To this end, values for the angle 246 can vary, e.g., greater than and/or less than 90 ° and/or in a range of 100 ° to 180 °. This disclosure contemplates that the angle 246 includes reasonable manufacturing tolerances understood by artisans familiar with relevant techniques to manufacture embodiments of the fan shrouds described herein.

The side elements 216, 218 can take a variety of shapes. For example, the side elements 216, 218 can form a plane and/or a planar surface that extends from the first end 242 to the second end 244 and axially from the front element 114 to the back element 116. In other embodiments, the side elements 216, 218 can form a curvilinear surface, e.g., that curves inward and/or outward relative to the centerline 240 from the first end 242 to the second end 244. This curvature can form concave and/or convex feature in the side elements 216, 218. Selection of the appropriate shape of the side elements 216, 218 can vary as necessary to tune the flow characteristics (e.g., velocity) of the air transiting out of the fan shroud 200, as disclosed herein.

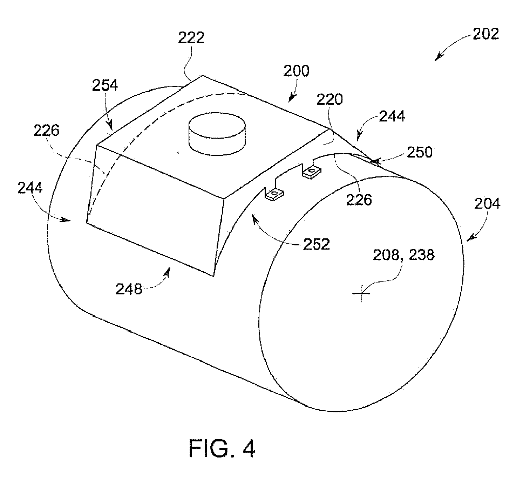

FIGS. 4, 5, 6, and 7 illustrate the fan shroud 200 in position on the motor 204 of the motor assembly 202. In the perspective view of FIG. 4, the shroud axis 238 aligns with the central motor axis 208 of the motor 204. The first side element 216 and the second side element 218 form side gaps (e.g., a first side gap 248 and a second side gap 250) where the side element 216, 218 is spaced apart from the motor 204 at the second end 244. The edge 226 of the front element 220 and the back element 222 also forms a front gap 252 and a back gap, identified generally by the numeral 254. The configuration of the gaps 248, 250, 252, 254 allow cooling fluid to exit the fan shroud 200, e.g., during operation of the fan 212.

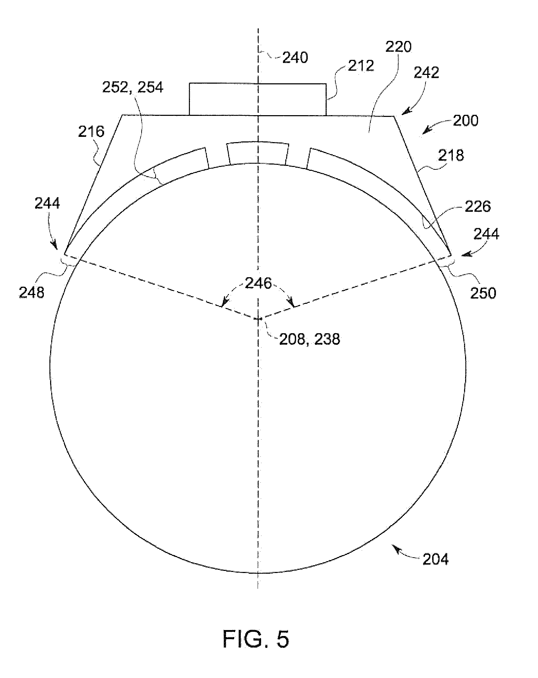

FIG. 5 shows a front view of the fan shroud 200 of FIG. 4. As can be seen in FIG. 5, the configuration of the side gaps 248, 250 provide space between the side elements 216, 218 and the motor 204. The amount of space can be defined at the second end 244 by a first side distance between the first side element 216 and the motor 204 and a second side distance between the second side element 216 and the motor 204. In one example, the first side distance and/or the second side distance are axially constant from the front (e.g., the front element 220) to the back (e.g., the back element 222) of the fan shroud 200. This feature maintains the space axially along the central axis 208 of the motor 204. The configuration of the front gap 252 and the back gap 254 provide space between the edge 226 of the front element 220 (and the back element 222 (FIG. 4)) and the motor 204. The amount of space can be defined by a first front distance between the edge 226 of the front element 220 and the motor 204 and a first back distance between the edge 226 of the back element 222 and the motor 204. The shape and contour of the edge 226 can determine the values of first front distance and the first back distance.

Selection of the distances (e.g., the first side distance, the second side distance, the first front distance, and the first back distance) can determine how the fluid disperses about the motor 204. In one implementation, the space formed by the first gap 248, the second gap 250, the front gap 252, and the back gap 254 are the same, i.e., the first side distance, the second side distance, the first front distance, and the first back distance are the same.

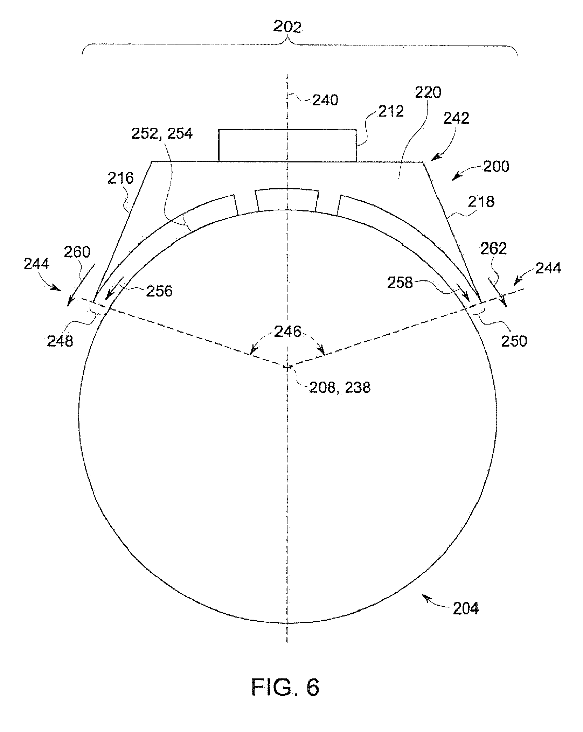

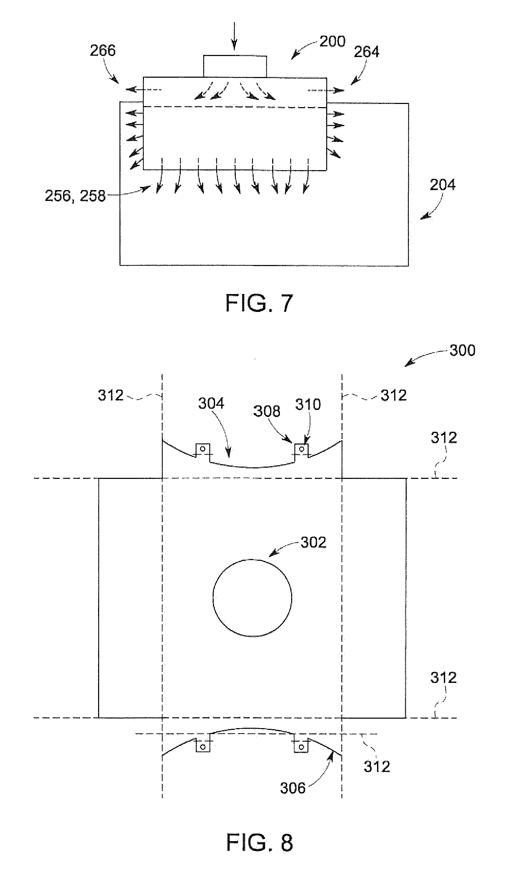

FIGS. 6 and 7 illustrate one exemplary flow pattern that develops using embodiments of the fan shroud disclosed herein. In FIG. 6, the flow pattern includes a plurality of primary side airstreams (e.g., a first primary side airstream 256 and a second primary side airstream 258). A plurality of peripheral side airstreams (e.g. a first peripheral side airstream 260 and a second peripheral side airstream 262) can enter the primary side airstreams 256, 258 near the second end 244 of the side elements 216, 218. FIG. 7 depicts a side view of the fan shroud 200 of FIG. 4 to illustrate additional features of the exemplary flow pattern. In FIG. 7, the flow pattern further includes a plurality of primary front airstreams 264 and a plurality of primary back airstreams 266.

As shown in FIGS. 6 and 7, the configuration of the fan shroud 200 allows cooling fluid to exit the fan shroud 200 via the side, front, and back as the cooling fluid traverses the motor 204. When the distances are the same (and/or have similar values) the cooling fluid flows evenly out of the fan shroud 200 via the gaps 248, 250, 252, 254. As discussed above, this feature allows the cooling fluid to flow close to the motor 204 for distances farther away from the fan shroud to improve heat dissipation that cools the motor 204. In one example, the primary side airstreams 256, 258 exit the fan shroud 200 at a maximum velocity and at a low pressure. These characteristics of the primary side airstreams 256, 258 permits cooler fluid (e.g., peripheral side airstreams 260, 262) from outside of the fan shroud 200 to mix with the cooling fluid to improve thermal dissipation during operation of the fan 212. This feature introduces additional cooling fluid in proximity of the surface of the motor 204 to achieve optimal heat transfer for a given flow rate and pressure drop without requiring additional fans or other air moving devices.

FIG. 8 illustrates an example of a material blank 300 that can be used to form the fan shrouds 100, 200 of FIGS. 1, 2, 3, 4, 5, 6, and 7. Examples of the material blank 300 can embody a square and/or generally rectangular piece of sheet metal having a material thickness of from about 0.5 mm to about 10 mm. As shown in FIG. 8, this material can be cut, e.g., laser cut, to form one or more of the features of the fan shrouds contemplated herein. For example, the laser cutting can create an opening 302, one or more radial surfaces (e.g., a first radial surface 304 and a second radial surface 306), and tabs 308 with penetrating apertures 310. In one embodiment, the material blank 300 can have a number of bend lines 312, about which the material of the material blank 300 is shaped and formed to form the general shape and characteristics of the fan shrouds discussed above.

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A fan shroud (200) for a motor (204), said fan shroud (200) comprising:
a top element (214), a first side element (216), and a front element (220), wherein the first side element (216) and the front element (220) couple with the top element (214) at a first end (242), wherein the first side element (216) terminates at a second end (244) that is spaced apart from the motor (204) a first side distance to form a first side gap (248), wherein the front element (220) has a front contoured edge (226) proximate to and spaced apart from the motor (204) a first front distance to form a front gap (252), and wherein the first side distance is substantially the same as the first front distance.

2. A fan shroud (200) according to claim 1, further comprising a second side element (218) that couples with the top element (214) at the first end (242) and terminates at the second end (244), wherein the second side element (218) is spaced apart from the motor (204) a second side distance to form a second side gap (250), and wherein the second side distance is substantially the same as the first side distance.

3. A fan shroud (200) according to claim 1 or claim 2, further comprising a back element (222) that couples with the top element (214), wherein the back element (222) has a back contoured edge that is spaced apart from the motor (204) a first back distance to form a back gap (254), and wherein the first back distance is substantially the same as the first side distance.

4. A fan shroud (200) according to any preceding claim, wherein the first side element (218) forms a planar surface or a curvilinear surface that extends along the shroud axis (238).

5. A fan shroud (200) according to any preceding claim, wherein the top element (214) has an aperture (224) extending therethrough.

6. A fan shroud (200) according to any preceding claim, wherein the first side element (216) and the front element (220) are formed integrally with the top element (214).

7. A fan shroud (200) according to claim 2, wherein the first contoured edge (226) terminates proximate to the second end (244) of the first side element (216) and the second end (244) of the second side element (218).

8. A fan shroud (200) according to claim 3, wherein the front element (220) and the back element (222) couple with the first side element (216).

9. A fan shroud (200) according to claim 3 or claim 8, further comprising one or more mounting features (228, 230) that secure to one of the front element (220) and the back element (222).

10. A fan shroud (200) for a motor (204), said fan shroud (200) comprising:
a top element (214);
a pair of side elements (216, 218) that couple with the top element (214) at a first end (242) and terminate at a second end (244) that is spaced apart from the motor (204) a first side distance and a second side distance to form, respectively, a first side gap (248) and a second side gap (250);
a front element (220) that couples with the top element (214) and has a front contoured edge (226) proximate to and spaced apart from the motor (204) a first front distance to form a front gap (252), and
a back element (222) that couples with the top element (214) and has a back contoured edge proximate to and spaced apart from the motor (204) a first back distance to form a back gap (254), wherein the first side distance is substantially the same as at least one of the first front distance and the first back distance.

11. A fan shroud (200) according to claim 10, wherein:
the second side distance is substantially the same as the first side distance, and/or
the first back distance is substantially the same as the first side distance, and/or
the first front distance and the first back distance are substantially the same as the first side distance.

12. A fan shroud (200) according to claim 11, wherein the side elements (216, 218) comprise a planar surface.

13. A fan shroud (200) according to claim 11, wherein the side elements comprise a curvilinear surface that curves relative to a centerline.

14. A motor assembly (202), comprising:
a motor (204) with a central motor axis (108); and
a fan shroud (200) according to any preceding claim coupled to the motor (204).

15. The motor assembly (202) of claim 14, further comprising a fan disposed on the fan shroud (200), wherein the fan shroud (200) has an aperture (224) to allow cooling fluid to flow through the fan shroud (200).
